# EUROPÄISCHE PATENTSCHRIFT

(11) **EP 3 327 997 B1**
(45) Veröffentlichungstag und Bekanntmachung des Hinweises auf die Patenterteilung: **05.06.2019**
(21) Anmeldenummer: 16200234.9
(22) Anmeldetag: 23.11.2016
(51) Int. Cl.: H04L 12/28, H04L 12/40, H04B 3/54

(54) **GEBÄUDEKOMMUNIKATIONSSYSTEM**
BUILDING COMMUNICATION SYSTEM
SYSTÈME DE COMMUNICATION DE BÂTIMENT

(43) Veröffentlichungstag der Anmeldung: 30.05.2018
(73) Patentinhaber: Feller AG, 8810 Horgen (CH)
(72) Erfinder: Murpf, Andreas, 8810 Horgen (CH)
(74) Vertreter: Schalch, Rainer

(56) Entgegenhaltungen:
- EP-A1- 1 289 217
- EP-A1- 1 357 680
- EP-A2- 0 479 104

## Beschreibung

### Gebiet der Erfindung

Die Erfindung betrifft ein Kommunikationssystem bei einer elektrischen Gebäudeinstallation gemäss Oberbegriff des Anspruchs 1. Ferner betrifft die Erfindung einen Apparat für eine elektrische Gebäudeinstallation zur Verwendung in dem Kommunikationssystem. Weiter betrifft die Erfindung ein Verfahren zur Kommunikation zwischen elektrischen Apparaten einer elektrischen Gebäudeinstallation.

### Hintergrund

Die Kommunikation von elektrischen Apparaten in der Gebäudeinstallation ermöglicht gegenüber konventionellen Installationen eine einfachere und nachträglich einfacher anpassbare Erstellung von komfortabel bedienbaren Installationslösungen, bei welchen zum Beispiel ein Lichtschalter mehrere Lampen schaltet und mehrere Lichtschalter eine Lampe schalten. Als Kommunikationslösung in der Gebäudeautomation sind Bussysteme bekannt. EP 1 050 825 A1 zeigt ein System mit einem 2-Draht-Bus. Aus EP 1 289 217 A1 ist ein System bekannt, bei welchem Netzspannungshalbwellen zur Datenübertragung verwendet werden. EP 0 479 104 A2 zeigt ein Sender-Empfänger System, bei welchem aus einem dreiphasigen Wechselstrom mehrphasige Rechtecksignale als Synchronisationssignale abgeleitet werden und Signalverarbeitungsmittel vorgesehen sind, welche Signalverarbeitungsmittel Signale mit Hilfe der Synchronisationssignale verarbeiten können, damit zur Kommunikation zwischen Sender und Empfänger eine Leitung eingesetzt werden kann. EP 1 357 680 A1 betrifft eine Hausinstallation, bei welcher eine Signalübertragung erfolgt und zur Kommunikation zwischen verschiedenen Phasenkreisen eine spezielle Vorrichtung eingesetzt wird.

### Darstellung der Erfindung

Der Erfindung liegt die Aufgabe zu Grunde ein Kommunikationssystem für die Kommunikation zwischen den elektrischen Apparaten einer Netzspannungs-Gebäudeinstallation zu schaffen, welches Kommunikationssystem besonders einfach zu installieren ist.

Diese Aufgabe wird mit einem Kommunikationssystem der eingangs genannten Art gelöst, bei welchem der Kommunikationsbus von einer einadrigen Leitung gebildet ist, auf welcher phasen- und sicherungsgruppenübergreifend binäre Signale als modulierte HF-Signale zwischen den Apparaten austauschbar sind, wobei die Apparate kapazitiv an die einadrige Leitung gekoppelt sind.

Durch die Verbindung aller Busteilnehmer mit einem einzigen zusätzlichen Installationsdraht in der elektrischen Gebäudeinstallation ergibt sich für den Installateur eine besonders einfache Installation des Kommunikationssystems. Die Systemzugehörigkeit der Apparate bzw. Geräte ist dabei durch den Anschluss an den von dem Installationsdraht gebildeten 1-Draht-Bus eindeutig definiert. Durch die HF-Übertragung und die kapazitive Ankopplung in den Apparaten bzw. Geräten, die an dem Bus anschlossen sind, kann auf zusätzliche Geräte, insbesondere Phasenkoppler, für die verschiedenen Sicherungsgruppen verzichtet werden. Die Ermöglichung der phasenkopplerlosen Kommunikation über die verschiedenen Phasen und Sicherungsgruppen der Netzspannungs-Gebäudeinstallation hinweg zwischen den Apparaten des Kommunikationssystems machen die erfindungsgemässe Lösung besonders einfach und kostengünstig installierbar. Dabei kommt der "physical Layer" (der einadrige Installationsdraht) den Installationsgewohnheiten des Elektrikers für die Hausinstallation entgegen und die von anderen Systemen bekannten Nachteile (Filter, Phasenkoppler, spezielles Buskabel, galvanische Trennung) und ein damit einher gehender Aufwand und hohe Kosten werden vermieden.

Bevorzugt erfolgt die Kommunikation mit einem modulierten Trägersignal im HF-Bereich zwischen 95 kHz und 125 kHz und somit im B-Frequenzband gemäss CENELEC Norm EN 50065 und bevorzugt erfolgt die Kommunikation bei ca. 100 kHz. Die Verwendung eines Trägersignals in einem anderen Frequenzband der genannten Norm ist indes ebenfalls möglich.

Weiter ist es bevorzugt, dass das Kommunikationssystem auf einfache Weise definiert ansprechbare Busteilnehmer aufweist, wozu es bevorzugt ist, dass die Apparate des Kommunikationssystems herstellerseitig mit einer individuellen Adresse für deren Identifikation im Kommunikationssystem versehen sind.

Weiter ist es bevorzugt, dass als Modulation für die Kommunikation eine Amplitudenumtastung (Amplitude-Shift Keying; ASK) des Trägers vorgesehen ist. Dies erlaubt eine einfache Modulation bzw. Demodulation. Es ist eine für das Anwendungsgebiet der Gebäudeinstallation genügend schnelle Kommunikation mit einer Bitrate von 1200 Baud erzielbar. Besonders bevorzugt ist es dabei, wenn zusätzlich eine zufällige Variation der Trägerfrequenz um plus/minus einige Hundert Herz vorgesehen ist, also zusätzlich zu der Amplitudenumtastung eine Frequenzmodulation des Trägersignals vorgehen wird. Dies verhindert die vollständige Auslöschung von Signalen auf dem Bus, falls zwei Apparate gleichzeitig derart auf dem Bus aktiv sind, dass absolut gleichfrequente Trägersignale sich gegenseitig auslöschen würden. Ein solches Vorgehen, bei welchem die arbiträre Frequenzmodulation der Trägerfrequenz durch ein Rauschsignal bewirkt wird, kann als NASK (Noisemodulated Amplitude Shift Keying) bezeichnet werden.

Weiter ist es bevorzugt, dass die einadrige Busleitung durch einen Busterminator mit dem Erdpotential der Gebäudeinstallation verbunden ist, der einen ohmschen Abschlusswiderstand für den Bus und ein Spannungsbegrenzungselement umfasst. Dies ergibt eine stabile Buslösung, die zudem gegen Installationsfehler gesichert ist, insbesondere gegen Vertauschung von Nullleiter und Phasenleiter und insbesondere gegen ein versehentliches Anlegen einer Phase auf den Bus.

Der Erfindung liegt weiter die Aufgabe zu Grunde einen elektrischen Apparat für Netzspannungshausinstallationen zu schaffen, der für ein solches Kommunikationssystem geeignet ist.

Dies wird durch einen elektrischen Apparat der eingangs genannten Art erreicht, der einen gemeinsamen Sendeausgang und Empfangseingang für binäre Zustände darstellende HF-Signale zum Anschluss des einadrigen Kommunikationsbus aufweist, wobei der Sendeausgang/Empfangseingang des Apparats zur kapazitiven Ankopplung an den Bus ausgeführt ist.

Es ergeben sich im Zusammenhang mit dem Kommunikationssystem die vorgenannten Vorteile, auf welche hier verwiesen wird.

Bevorzugt weist der jeweilige Apparat eine herstellerseitig fest vorgegebene Adresse auf, mittels welcher er im Kommunikationssystem identifizierbar ist.

Weiter ist es bevorzugt, dass der Apparat ein Amplitudenumtastungsmodem (Amplitude-Shift Keying Modem; ASK-Modem) aufweist. Und ferner ist es bevorzugt, dass das Amplitudenumtastungsmodem zusätzlich zur Aussendung und zum Empfang des zufällig um einige Hundert Herz frequenzverschobenen Trägers ausgestattet ist und somit ein NASK-Modem (NASK = Noisemodulated Amplitude Shift Keying) ist.

Der Erfindung liegt weiter die Aufgabe zu Grunde ein Verfahren zur Kommunikation zwischen elektrischen Apparaten einer Netzspannungsgebäudeinstallation zu schaffen. Dieses Verfahren soll die einfache, fehlerfreie und kostengünstige Erstellung von solchen Installationen ermöglichen.

Dies wird bei dem Verfahren der eingangs genannten Art dadurch erreicht, dass ein von einer einadrigen Leitung gebildeter Kommunikationsbus als Datenverbindung der Apparate vorgesehen wird, auf welchem Kommunikationsbus phasen- und sicherungsgruppenübergreifend mit den Daten modulierte HF-Signale zwischen den Apparaten ausgetauscht werden, wobei die Apparate kapazitiv an die einadrige Leitung gekoppelt sind.

Durch die Verbindung aller Busteilnehmer mit einem einzigen zusätzlichen Installationsdraht in der elektrischen Gebäudeinstallation ergibt sich für den Installateur eine besonders einfache Installation des Kommunikationssystems. Die Systemzugehörigkeit der Apparate bzw. Geräte ist dabei durch den Anschluss an den von dem Installationsdraht gebildeten 1-Draht-Bus eindeutig definiert. Durch die HF-Übertragung und die kapazitive Ankopplung in den Apparaten bzw. Geräten, die an dem Bus anschlossen sind, kann auf zusätzliche Geräte, insbesondere Phasenkoppler, für die verschiedenen Sicherungsgruppen verzichtet werden. Die Ermöglichung der phasenkopplerlosen Kommunikation über die verschiedenen Phasen und Sicherungsgruppen der Netzspannungs-Gebäudeinstallation hinweg zwischen den Apparaten des Kommunikationssystems machen das Vorgehen gemäss dem Verfahren besonders einfach und kostengünstig installierbar. Dabei kommt der "physical Layer" (der einadrige Installationsdraht) den Installationsgewohnheiten des Elektrikers für die Hausinstallation entgegen und die von anderen Systemen bekannten Nachteile (Filter, Phasenkoppler, spezielles Buskabel, galvanische Trennung) und ein damit einher gehender Aufwand und hohe Kosten werden vermieden.

Es ist insbesondere möglich, die Apparate verschiedener Phasen über die einadrige Leitung direkt miteinander zu verbinden, ohne Zwischenschaltung von Phasenkopplern. Zur Kommunikation wird bevorzugt ein HF-Trägersignal im Bereich von 95 kHz bis 125 kHz eingesetzt und insbesondere ein HF-Trägersignal von ca. 100 kHz. Als Modulationsart für die Kommunikation erfolgt bevorzugt eine Amplitudenumtastung (Amplitude-Shift Keying; ASK) des Trägers, wobei es weiter bevorzugt ist, dass eine zufällige Variation der Trägerfrequenz um plus/minus einige Hundert Herz erfolgt, insbesondere gemäss dem erwähnten NASK (Noisemodulated Amplitude Shift Keying) Verfahren.

Bei dem Verfahren werden elektrische Gebäudeinstallationsapparate verwendet, welche vorzugsweise herstellerseitig mit einer individuellen Adresskennung für deren Identifikation im Kommunikationssystem versehen sind.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung von Ausführungsbeispielen der Erfindung anhand der Figuren. Dabei zeigt:
Figur 1 vereinfacht ein Kommunikationssystem gemäss einem Ausführungsbeispiel der Erfindung in einem Gebäude;
Figur 2 einen Apparat des Kommunikationssystems mit einem ASK-Modem bzw. NASK-Modem und die Ankopplung des Apparats an den von eine einadrigen Leitung gebildeten Bus; und
Figur 3 zeigt ein Beispiel des HF-Bussignals bei der Sendung/dem Empfang einer binären Signalfolge.

### Weg(e) zur Ausführung der Erfindung

Es werden nachfolgend Beispiele der Erfindung an Hand einer stark vereinfacht dargestellten Netzspannungs-Gebäudeinstallation erläutert.

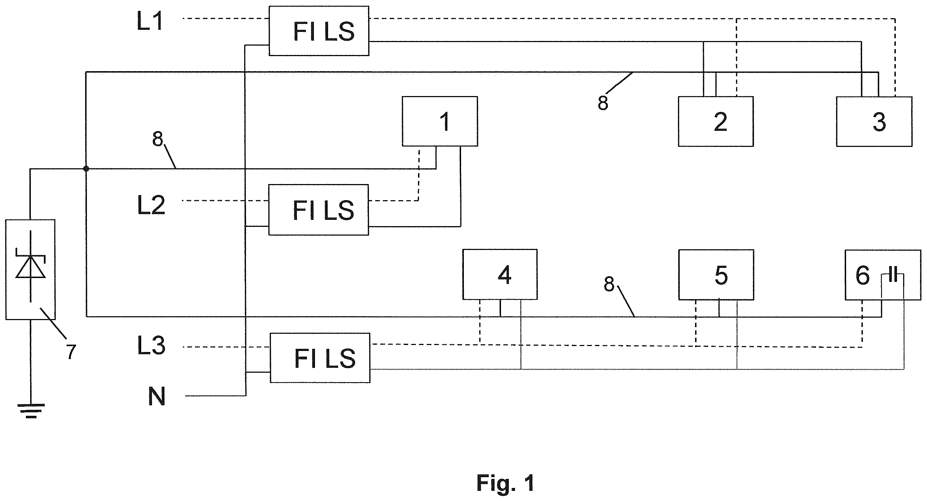

Figur 1 zeigt ein nur angedeutetes Gebäude 10, welches ein Wohnhaus oder ein Industriegebäude oder ein anderes Gebäude sein kann. Das Gebäude verfügt über eine Netzspannungsinstallation zur Versorgung von elektrischen Verbrauchern im Gebäude. Eine solche Netzspannungsinstallation ist der Fachperson bekannt und wird hier nicht im Detail dargestellt. Indes ist gezeigt, dass die Netzspannungsinstallation die drei Netzphasenleiter L1, L2 und L3 sowie den Neutralleiter N aufweist. Ein Erdleiter E ist ebenfalls vorhanden, wird aber nur im Zusammenhang mit dem später erläuterten bevorzugten BUSTerminator erwähnt. In dem gezeigten Beispiel bildet jeder Phasenkreis zugleich einen Sicherungskreis mit den zugeordneten Fehlerstromschaltern FILS. Es ist für die Fachperson klar, dass dies ein vereinfachtes Beispiel einer Netzspannungsinstallation eines Gebäudes ist und dass eine tatsächliche Installation wesentlich umfangreicher sein kann, wobei ihr auch dann ein solcher grundsätzlicher Aufbau eigen ist. Verfügt eine elektrische Gebäudeinstallation über einen Kommunikationsbus zur Kommunikation zwischen elektrischen Apparaten der Gebäudeinstallation, so geben die Apparate bei Betätigung Steuersignale auf den Bus ab, die von anderen Apparaten der Installation über den Bus empfangen werden, um dort eine Funktion auszulösen oder die als Rückmeldung für einen Zustand oder eine erfolgte Funktion dienen. Dies ist auch bei der vorliegenden Erfindung der Fall.

In dem gezeigten Beispiel umfasst die Netzspannungsinstallation sechs Apparate 1 bis 6. Solche Apparate können alle bekannten Apparate sein, wie sie bei der Gebäudeinstallation Verwendung finden. Insbesondere handelt es sich um von Personen betätigbare Schalter und Taster, zum Beispiel zur Schaltung von Verbrauchern, wie zum Beispiel Lampen oder Storen. Auf der Verbraucherseite ist hingegen ein Apparat vorgesehen, welcher mittels der über den Bus empfangenen Steuersignale und mit einem elektronischen Schalter des Apparats den am Apparat angeschlossenen Verbraucher betätigt, also eine Lampe oder einen Motor einschaltet bzw. ausschaltet. Zur Kommunikation miteinander sind die Apparate 1 bis 6 durch eine den Kommunikationsbus bildende einadrige Leitung 8 verbunden, die in diesem Beispiel zu allen Apparaten führt. Es können zusätzlich auch mit der Netzspannungsinstallation verbundene Apparate vorhanden sein, welche nicht mit dem Bus verbunden sind und Verbraucher auf herkömmliche Weise schalten, was hier nicht weiter behandelt wird.

In dem gezeigten Beispiel einer erfindungsmässen Lösung, kann der der Netzphase L2 zugeordnete Apparat 1 ein von Hand betätigbarer Taster sein und der der Netzphase L1 zugeordnete Apparat 3 kann ein von Hand betätigbarer Schalter sein. Die Apparate 2, 5 und 6 können zum Beispiel über Leitung 8 vom Schalter 1 aktivierbar sein und an diesen Apparaten angeschlossene Lampen schalten und/oder dimmen. Der Apparat 4 kann zum Beispiel via den Bus bzw. die Leitung 8 mittels des Tasters 1 bedienbar sein und einen am Apparat angeschlossenen Storenmotor schalten.

Bei dem Kommunikationssystem gemäss der Erfindung bzw. bei dem erfindungsgemässen Verfahren und den erfindungsgemässen Apparaten ist es so, dass einerseits der Bus eine einfache einadrige Leitung ist und somit die Apparate für die Signalverbindung zum Bus nur einen Anschluss zur Aufnahme der einadrigen Leitung aufweisen. Dies erlaubt eine besonders einfache Installation des Busses und der Apparate und eine einfache, nicht fehleranfällige Verbindung der Apparate mit dem Bus. Ferner ergibt sich eine eindeutige Zuordnung der erfindungsgemässen Apparate zum Bus, indem ein Apparat lediglich an die einadrige Busleitung angeschlossen werden muss, um Teil des Kommunikationssystems bzw. des Verfahrens zu sein. Bei dieser erfindungsgemässen Lösung für die Kommunikation müssen keine speziellen und aufwändigen Trennungen zwischen verschiedenen derartigen Kommunikationssystemen im selben Gebäude eingesetzt werden, insbesondere können die in einem Gebäude benachbarten Wohnungen ohne den Einsatz spezieller Filter bei der Gebäudeinstallation mit jeweils ihrem eigenem Kommunikationssystem arbeiten.

Ein Wesentlicher weiterer Vorteil der erfindungsgemässen Lösung ist, dass die Kommunikation ohne besondere Massnahmen phasen- und sicherungsgruppenübergreifend erfolgt. Es werden also beim Kommunikationssystem bzw. Verfahren der Erfindung keine Phasenkoppler benötigt. Auf dem einadrigen Bus erfolgt die Kommunikation zwischen der Geräten mit modulierten HF-Signalen, die im jeweiligen Apparat kapazitiv eingekoppelt bzw. ausgekoppelt werden. Dies ist beim Apparat 6 symbolisch mit dem Kondensator dargestellt, der zwischen den Bus bzw. die einadrige Leitung 8 und den Neutralleiter N geschaltet ist; eine solche kapazitive Kopplung ist bei jedem Apparat des Kommunikationssystems vorgesehen. Diese Lösung ist sicherheitstechnisch unbedenklich und löst die Fehlerstromschutzschalter FILS nicht aus

In diesem Beispiel ist jeder Apparat 1 bis 6 mit dem Bus verbunden und somit kapazitiv an den Bus gekoppelt. Das Buspotential ist im Normalbetrieb auf Nulleiterpotential. Der Pegel der noch zu erläuternden Kommunikationssignale liegt zum Beispiel bei 3 Vpp. Bevorzugt ist die einadrige Leitung 8 durch einen Busterminator 7 gegen Erde geschaltet. Dieser Busterminator bildet einen ohmschen Abschlusswiderstand für den Bus und kann als Spannungsbegrenzung für den Fall eines Installationsfehlers ausgestaltet sein, die zum Beispiel bei der Vertauschung von L und N Leitern bei der Installation wirksam wird. Die Spannung auf dem Bus kann dadurch - was durch das Z-Diodensymbol mit antiseriell geschalteten Dioden im Busterminator symbolisiert ist - zum Beispiel auf 5 Vpp begrenzt werden.

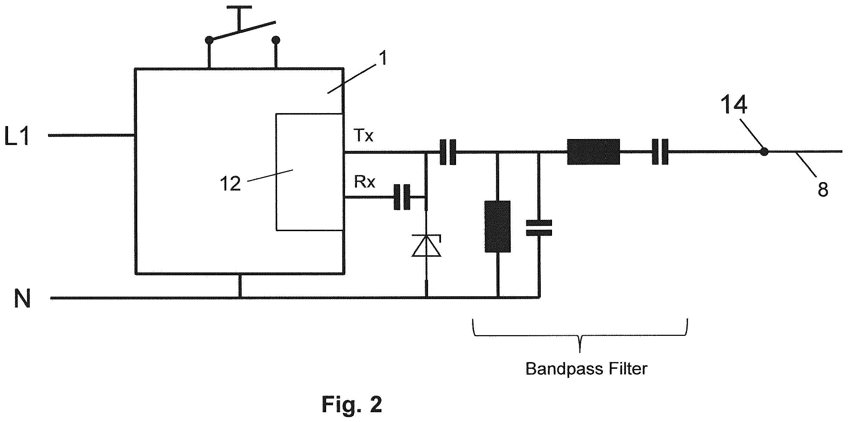

Figur 2 zeigt vereinfacht den Apparat 1 von Figur 1 mit einem von Hand betätigbaren Taster 11. Die nachfolgenden Erläuterungen gelten aber auch für einen Apparat, der kein Element zur Betätigung von Hand aufweist sondern einen elektronischen Schalter zum Schalten und/oder Dimmen eines am Apparat angeschlossenen Verbrauchers. Der Apparat ist mit der Netzspannungsinstallation bzw. Mit dem Phasenleiter L1 und dem Neutralleiter verbunden. Weiter weist der Apparat ein Modem 12 mit einem Sendeausgang Tx und einem Empfangseingang Rx auf. Diese sind, vorzugsweise über ein Bandpassfilter 13, mit einem Signalanschluss 14 des Apparats verbunden, an welchen die einadrige Leitung 8 angeschlossen ist, die den Bus bildet. Die Ein- und Auskopplung der Signale auf den Bus bzw. vom Bus zum Modem erfolgt kapazitiv über den Kondesator C, der im gezeigten Beispiel zugleich Teil des Bandpassfilters ist. Auf das Übertragungsmedium des Kommunikationssystems, den einadrigen Installationsdraht 8 wird durch den Apparat bzw. das Modem ein hochfrequentes Trägersignal gelegt. Dies erlaubt die kapazitive Kopplung der Apparate an den Bus und damit die phasen- und sicherungsübergreifende Anordnung des Busses und phasen- und sicherungsübergreifende Kommunikation ohne zusätzlich Mittel, wie zum Beispiel Phasenkoppler. Das hochfrequente Trägersignal wird durch den Apparat moduliert bzw. demoduliert, um die binären Steuersignale via den Bus an andere Busteilnehmer bzw. Apparate zu übertragen bzw. von anderen Busteilnehmern ausgesandte Steuersignale zu empfangen und damit auswerten zu können. Es kommt grundsätzlich eine beliebige Modulationsart für das HF-Trägersignal in Frage. Für das HF-Trägersignal wird der Frequenzbereich von 95 Kilohertz bis 125 Kilohertz bevorzugt, insbesondere eine Frequenz von ca. 100 Kilohertz. Ein derartiges HF-Trägersignal ist bei der Topologie einer Gebäudeinstallation unkritisch verwendbar. Gemäss der bevorzugten Ausführung wird das Trägersignal amplitudenmoduliert (ASK, Amplitude Shift Keying).

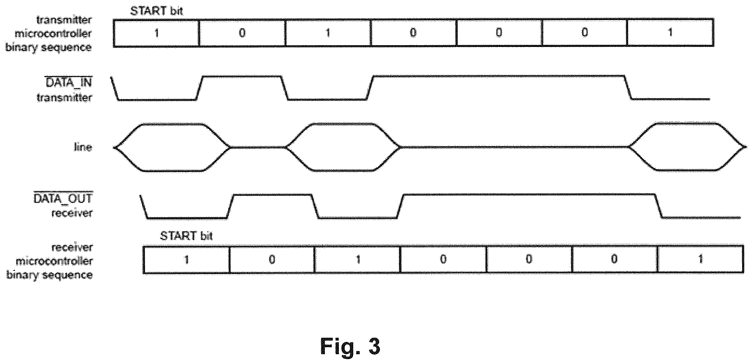

Figur 3 zeigt das Prinzip der Kommunikation bzw. binären Datenübertragung mit der Amplitudenmodulation. In der Figur von oben nach unten ist eine von einem Apparat auf den Bus abgegebene Bitfolge 1010001 dargestellt ("transmitter microcontroller binary sequence"), welche darunter als an den Sender des Modems abgegebenes Signal ("DATA_IN transmitter") dargestellt ist und darunter als moduliertes Trägerfrequenzsignal ("line") auf der einadrigen Leitung 8. Darunter ist das Empfangssignal des Modems ersichtlich, nachdem dieses das modulierte Trägerfrequenzsignal empfangen hat ("DATA_OUT receiver") und schliesslich die vom empfangenden Apparat empfangene Bitfolge ("receiver microcontroller binary sequence"), die der gesendeten Bitfolge entspricht. Die binären Daten codieren somit im bevorzugten Beispiel das Trägersignal als vorhanden bzw. 100% oder nichtvorhanden bzw. 0%. Dabei kann 100% für eine binäre "1" stehen und 0% für eine binäre "0", wie im dargestellten Beispiel oder auch umgekehrt. Diese einfache Modulationsart erlaubt eine Bitrate von 1200 Baud, was für die Datenübertragung in einem Kommunikationssystem für die Apparate einer elektrischen Gebäudeinstallation genügend ist.

Die Kommunikation der Apparate des Kommunikationssystems mittels der binären Signale erfolgt auf eine beliebige geordnete Weise, insbesondere durch Festlegung, dass die einzelnen Nachrichten in einem vorbestimmten Datenformat bzw. als "Datenframes" bestimmter Länge verschickt werden. Solches ist der Fachperson von Bussystemen grundsätzlich bekannt und muss hier nicht im Detail erläutert werden. Zum Beispiel kann ein solches Datenframe immer mit einem Bit "1" beginnen und kann nachfolgend Bits enthalten, welche die Priorität der Nachricht auf dem Bus regeln. Ferner wird das Datenframe die Apparateadresse des sendenden Apparats und eines oder mehrerer empfangender Apparate beinhalten sowie die Angabe von auszuführenden Aktionen. Korrekt erhaltene Datenframes können von den empfangenden Busteilnehmern bzw. Apparaten mit einem Datenframe beantwortet werden, wozu dieses ein Feld als Empfangsbestätigung vorsieht. Ferner ist es üblich, solche Datenframes definiert abzuschliessen.

Die Kollisionsauflösung bei zwei gleichzeitig sendenden Apparaten kann zum Beispiel wie bei dem der Fachperson bekannten CAN-Bus gelöst werden, mit dominanten und rezessiven Bits, was der Fachperson bekannt ist und hier nicht weiter erläutert werden muss. Ferner kann ein ASK-Modem in einem handelsüblichen Mikrokontroller implementiert werden, wodurch die Busankopplung der Apparate kostengünstig realisiert werden kann.

Bevorzugt wird zusätzlich zur erläuterten Amplitudenmodulation eine arbiträre, also zufällige, Frequenzmodulation des Trägersignals um zum Beispiel +/- 500 Hertz durchgeführt. Das für die Information amplitudenmodulierte Trägersignal weist somit eine zufällig ändernde Frequenz von zum Beispiel 100 kHz +/- 500 Hz auf. Die Zufälligkeit kann durch einen Rauschgenerator erzeugt werden, weshalb für diese Variante von einem NASK Verfahren gesprochen wird (Noisemodulated Amplitude Shift Keying). Dies erhöht die Empfangbarkeit und Auswertbarkeit der Kommunikationssignale auf dem Bus. Falls zwei Apparate am Bus gleichzeitig ein dominantes Bit senden, könnten sich die beiden Trägersignale bei 180° Phasenverschiebung exakt auslöschen. Dadurch könnte es vorkommen, dass das Signal von den anderen Apparaten nicht empfangen werden kann. Dieser Fall kann durch die Frequenzmodulation des Trägersignals verhindert werden. In jedem Apparat erzeugt ein Zufallsgenerator (Rauschgenerator) die zusätzliche Frequenzmodulation des Trägersignals, womit eine vollständige Auslöschung zweier solcher Signale sehr unwahrscheinlich wird. Diese Modulation der Trägerfrequenz muss sicherstellen, dass die Frequenz mehrmals pro Zeit eines Bits (ca. 0,8 msec) verändert wird und die Signalempfänger müssen so aufgebaut sein, dass sie auch stark variierende Signalpegel korrekt empfangen können.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Kommunikationssystem bei einer elektrischen Gebäudeinstallation, welche Gebäudeinstallation mehrere Netzspannungsphasen (L1, L2, L3) und Sicherungsgruppen (FILS) und diesen zugeordneten elektrische Apparate (1 - 6) umfasst, wobei die zum Kommunikationssystem gehörenden Apparate zum Austausch von Daten über eine Busverbindung des Kommunikationssystems ausgestaltet sind, und wobei die Busverbindung von einer einadrigen Leitung (8) gebildet ist, welche die zum Kommunikationssystem gehörenden Apparate phasen- und sicherungsgruppenübergreifend verbindet, **dadurch gekennzeichnet, dass** die Apparate des Kommunikationssystems ausgestaltet sind, um modulierte HF-Trägersignale, die insbesondere binäre Zustände darstellen, zwischen den Apparaten auszutauschen, und wobei diese Apparate (1 - 6) kapazitiv an die einadrige Leitung (8) gekoppelt sind.

2. Kommunikationssystem nach Anspruch 1, wobei die Apparate verschiedener Phasen über die einadrige Leitung direkt verbunden sind, ohne Zwischenschaltung von Phasenkopplern.

3. Kommunikationssystem nach Anspruch 1 oder 2, wobei zur Kommunikation ein HF-Trägersignal im Bereich von 95 kHz bis 125 kHz eingesetzt ist und insbesondere ein HF-Trägersignal von ca. 100 kHz.

4. Kommunikationssystem nach einem der Ansprüche 1 bis 3, wobei die Apparate des Kommunikationssystems herstellerseitig mit jeweils einer individuellen Adresskennung für deren Identifikation im Kommunikationssystem versehen sind, welche Adresskennungen durch die Apparate über die einadrige Leitung austauschbar sind.

5. Kommunikationssystem nach einem der Ansprüche 1 bis 4, wobei als Modulation für die Kommunikation Amplitudenumtastung des HF-Trägersignals vorgesehen ist.

6. Kommunikationssystem nach Anspruch 5, wobei eine zufällig erzeugte Modulation der Frequenz des HF-Trägersignals um plus/minus 100 Hz bis 1000 Hz vorgesehen ist, und insbesondere eine zufällig erzeugte Modulation der Frequenz des HF-Trägersignals um plus/minus 500 Hz vorgesehen ist.

7. Kommunikationssystem nach einem der Ansprüche 1 bis 6, wobei die einadrige Busleitung (8) durch einen Busterminator (7) umfassend eine ohmschen Abschlusswiderstand für den Bus und gegebenenfalls zusätzlich umfassend eine Spannungsbegrenzung, mit dem Erdpotential der Gebäudeinstallation verbunden ist.

8. Apparat, insbesondere Schalter oder Taster für Netzspannung, zum Einsatz in dem Kommunikationssystem nach einem der Ansprüche 1 bis 7, **dadurch gekennzeichnet, dass** der Apparat einen gemeinsamen Sendeausgang und Empfangseingang (14) für binäre Zustände darstellende modulierte HF-Trägersignale zum Anschluss der einadrigen Leitung (8) aufweist, und dass der Sendeausgang/Empfangseingang des Apparats zur kapazitiven Ankopplung an die einadrige Leitung ausgeführt ist.

9. Apparat nach Anspruch 8, wobei dieser eine herstellerseitig eingestellte individuelle Adresskennung des Apparats für die Kommunikation aufweist.

10. Apparat nach Anspruch 8 oder 9, wobei dieser ein Amplitudenumtastungsmodem aufweist.

11. Apparat nach Anspruch 10, wobei das Amplitudenumtastungsmodem zusätzlich zur Aussendung eines zufällig um plus/minus 100 Hz bis plus/minus 1000 Hz und insbesondere des zufällig um plus/minus 500 Hz frequenzmodulierten Trägersignals ausgestattet ist.

12. Verfahren zur Kommunikation zwischen den Apparaten einer elektrischen Gebäudeinstallation mit mehreren Netzspannungsphasen (L1, L2, L3) und Sicherungsgruppen (FILS) und diesen zugeordneten elektrischen Apparaten (1 - 6) sowie mit einem Kommunikationsbus für die Datenübertragung zwischen solchen Apparaten, wobei der Kommunikationsbus von einer einadrigen Leitung (8) gebildet ist, **dadurch gekennzeichnet, dass** auf besagter Leitung phasen- und sicherungsgruppenübergreifend mit den Daten modulierte HF-Trägersignale zwischen den Apparaten ausgetauscht werden, wobei die Apparate kapazitiv an die einadrige Leitung gekoppelt sind.

13. Verfahren nach Anspruch 12, wobei verschiedenen Netzspannungsphasen zugehörende Apparate über die einadrige Leitung direkt miteinander verbunden werden, ohne Zwischenschaltung von Phasenkopplern.

14. Verfahren nach Anspruch 12 oder 13, wobei zur Kommunikation ein HF-Trägersignal im Bereich von 95 kHz bis 125 kHz eingesetzt wird und insbesondere ein HF-Trägersignal von ca. 100 kHz eingesetzt wird.

15. Verfahren nach einem der Ansprüche 12 bis 14, wobei die Apparate herstellerseitig mit einer individuellen Adresskennung für deren Identifikation im Kommunikationssystem versehen sind.

16. Verfahren nach einem der Ansprüche 12 bis 15, wobei als Modulation für die Kommunikation Amplitudenumtastung des HF-Trägersignals vorgesehen ist.

17. Verfahren nach Anspruch 16, wobei eine zufällig erzeugte Modulation der Frequenz des HF-Trägersignals um plus/minus 100 Hz bis 1000 Hz vorgesehen ist, und insbesondere eine zufällig erzeugte Modulation der Frequenz des HF-Trägersignals um plus/minus 500 Hz vorgesehen ist.

## Claims

1. Communication system in an electrical building installation, which building installation comprises a plurality of mains voltage phases (L1, L2, L3) and fuse groups (FILS) and electrical apparatuses (1 - 6) associated therewith, wherein the apparatuses belonging to the communication system are designed for the exchange of data via a bus connection of the communication system, and wherein the bus connection is formed by a single-wire line (8) which connects the apparatuses belonging to the communication system across phases and fuse groups, **characterized in that** the apparatuses of the communication system are designed to exchange modulated RF carrier signals, which in particular represent binary states, between the apparatuses, and wherein these apparatuses (1-6) are capacitively coupled to the single-wire line (8).

2. Communication system according to claim 1, wherein the apparatuses of different phases are directly connected via the single-wire line, without interposition of phase couplers.

3. Communication system according to claim 1 or 2, wherein an RF carrier signal in the range from 95 kHz to 125 kHz is used for communication, and in particular an RF carrier signal of approximately 100 kHz.

4. Communication system according to one of claims 1 to 3, wherein the apparatuses of the communication system are each provided by the manufacturer with an individual address identifier for their identification in the communication system, which address identifiers can be exchanged by the apparatuses via the single-wire line.

5. Communication system according to one of claims 1 to 4, wherein amplitude shift keying of the RF carrier signal is provided as modulation for the communication.

6. Communication system according to claim 5, wherein a randomly generated modulation of the frequency of the RF carrier signal by plus/minus 100 Hz to 1000 Hz is provided, and in particular a randomly generated modulation of the frequency of the RF carrier signal by plus/minus 500 Hz is provided.

7. Communication system according to one of claims 1 to 6, wherein the single-core bus line (8) is connected to the earth potential of the building installation by a bus terminator (7) comprising an ohmic terminating resistor for the bus and optionally additionally comprising a voltage limiter.

8. Apparatus, in particular switch or button for mains voltage, for use in the communication system according to one of claims 1 to 7, **characterized in that** the apparatus has a common transmit output and receive input (14) for modulated HF carrier signals representing binary states for connecting the single-wire line (8), and **in that** the transmit output/receive input of the apparatus is designed for capacitive coupling to the single-wire line.

9. Apparatus according to claim 8, wherein the apparatus has an individual address identification of the apparatus for communication which is set by the manufacturer.

10. Apparatus according to claim 8 or 9, which has an amplitude shift keying modem.

11. Apparatus according to claim 10, wherein the amplitude shift keying modem is equipped in addition to transmitting a carrier signal frequency-modulated randomly by plus/minus 100 Hz to plus/minus 1000 Hz and in particular of the carrier signal frequency-modulated randomly by plus/minus 500 Hz.

12. Method for communication between the apparatuses of an electrical building installation having a plurality of mains voltage phases (L1, L2, L3) and fuse groups (FILS) and electrical apparatuses (1-6) associated therewith and having a communication bus for data transmission between such apparatuses, wherein the communication bus is formed by a single-wire line (8) **characterized in that** the line RF carrier signals modulated with the data are exchanged between the apparatuses across phases and fuse groups, the apparatuses being capacitively coupled to the single-wire line.

13. Method according to claim 12, wherein apparatuses belonging to different mains voltage phases are directly connected to one another via the single-wire line, without interposition of phase couplers.

14. Method according to claim 12 or 13, wherein an RF carrier signal in the range from 95 kHz to 125 kHz is used for communication and, in particular, an RF carrier signal of approximately 100 kHz is used.

15. Method according to one of claims 12 to 14, wherein the apparatuses are provided by the manufacturer with an individual address identifier for their identification in the communication system.

16. Method according to one of claims 12 to 15, wherein amplitude shift keying of the RF carrier signal is provided as modulation for the communication.

17. Method according to claim 16, wherein a randomly generated modulation of the frequency of the RF carrier signal by plus/minus 100 Hz to 1000 Hz is provided, and in particular a randomly generated modulation of the frequency of the RF carrier signal by plus/minus 500 Hz is provided.

## Revendications

1. Système de communication dans une installation électrique de bâtiment, l'installation de bâtiment comprenant une pluralité de phases de tension de réseau (L1, L2, L3) et de groupes de fusibles (FILS) et d'appareils électriques (1 à 6) associés à ceux-ci, les appareils appartenant au système de communication étant conçus pour échanger des données via une connexion bus du système de communication, et la connexion de bus étant formée par une ligne monofilaire (8) qui relie les appareils appartenant au système de communication entre phases et groupes de fusibles, **caractérisé en ce que** les appareils du système de communication sont conçus pour échanger des signaux porteurs RF modulés, qui représentent notamment des états binaires, entre les appareils, et ces appareils (1-6) sont couplés capacitivement à la ligne monofilaire (8).

2. Système de communication selon la revendication 1, dans lequel les appareils de différentes phases sont reliés directement par la ligne monofilaire, sans interposition de coupleurs de phase.

3. Système de communication selon la revendication 1 ou 2, dans lequel un signal porteur RF dans la plage de 95 kHz à 125 kHz est utilisé pour la communication, et en particulier un signal porteur RF d'environ 100 kHz.

4. Système de communication selon l'une des revendications 1 à 3, les appareils du système de communication étant munis chacun par le fabricant d'un identificateur d'adresse individuel pour leur identification dans le système de communication, ces identificateurs d'adresse pouvant être échangés par les appareils via la ligne monofilaire.

5. Système de communication selon l'une des revendications 1 à 4, dans lequel une modulation du signal porteur RF par déplacement d'amplitude est prévue comme modulation pour la communication.

6. Système de communication selon la revendication 5, dans lequel une modulation générée de manière aléatoire de la fréquence du signal porteur RF de plus/moins 100 Hz à 1000 Hz est prévue, et en particulier une modulation générée de manière aléatoire de la fréquence du signal porteur RF de plus/moins 500 Hz est prévue.

7. Système de communication selon l'une des revendications 1 à 6, la ligne de bus monofilaire (8) étant reliée au potentiel de terre de l'installation du bâtiment par une terminaison de bus (7) comprenant une résistance de terminaison ohmique pour le bus et comprenant éventuellement en plus un limiteur de tension.

8. Appareil, en particulier commutateur ou bouton-poussoir pour tension de réseau, destiné à être utilisé dans le système de communication selon l'une des revendications 1 à 7, **caractérisé en ce que** l'appareil présente une sortie d'émission et une entrée de réception communes (14) pour des signaux porteurs HF modulés représentant des états binaires pour connecter la ligne monofilaire (8), et **en ce que** la entrée de réception/émission de l'appareil est conçue pour couplage capacitif à la ligne monofilaire.

9. Appareil selon la revendication 8, l'appareil ayant une identification d'adresse individuelle de l'appareil pour la communication, qui est réglée par le fabricant.

10. Appareil selon la revendication 8 ou 9, qui possède un modem à modulation par déplacement d'amplitude.

11. Appareil selon la revendication 10, dans lequel le modem à modulation par déplacement d'amplitude est équipé en plus de la transmission d'un signal porteur modulé aléatoirement en fréquence de plus/moins 100 Hz à plus/moins 1000 Hz et en particulier le signal porteur modulé aléatoirement en fréquence de plus/moins 500 Hz.

12. Procédé de communication entre les appareils d'une installation électrique de bâtiment comportant plusieurs phases de tension de réseau (L1, L2, L3) et plusieurs groupes de fusibles (FILS) et appareils électriques (1-6) associés à ceux-ci et comportant un bus de communication pour la transmission de données entre ces appareils, le bus de communication étant formé par une ligne monofilaire (8), **caractérisé en ce que** les signaux porteurs RF de ligne modulés avec les données sont échangés entre les appareils à travers des groupes de phases et de fusibles, les appareils étant couplés capacitivement à la ligne monofilaire.

13. Procédé selon la revendication 12, dans lequel des appareils appartenant à différentes phases de tension de réseau sont directement reliés les uns aux autres via la ligne monofilaire, sans interposition de coupleurs de phase.

14. Procédé selon la revendication 12 ou 13, dans lequel un signal porteur RF dans la plage de 95 kHz à 125 kHz est utilisé pour la communication et en particulier un signal porteur RF d'environ 100 kHz est utilisé.

15. Procédé selon l'une des revendications 12 à 14, dans lequel les appareils sont munis par le fabricant d'un identificateur d'adresse individuel pour leur identification dans le système de communication.

16. Procédé selon l'une des revendications 12 à 15, dans lequel la modulation du signal porteur RF par déplacement d'amplitude est prévue comme modulation pour la communication.

17. Procédé selon la revendication 16, dans lequel on prévoit une modulation générée de manière aléatoire de la fréquence du signal porteur RF de plus/moins 100 Hz à 1000 Hz, et en particulier une modulation générée de manière aléatoire de la fréquence du signal porteur RF de plus/moins 500 Hz.
